# EUROPÄISCHE PATENTSCHRIFT

(11) **EP 0 475 128 B1**
(45) Veröffentlichungstag und Bekanntmachung des Hinweises auf die Patenterteilung: **28.12.1994**
(21) Anmeldenummer: 91113872.5
(22) Anmeldetag: 19.08.1991
(51) Int. Cl.: F27B 7/20, F27D 17/00, C22B 7/00

(54) **Verfahren zur Verringerung von Schadstoffen in den Abgasen brennerbefeuerter Schmelzöfen**
Process for the reduction of pollutants in the exhaust gases of a burner fired smelt-oven
Procédé pour diminuer la teneur en polluants dans les gaz d'échappement d'un four de fusion chauffé par un brûleur

(30) Priorität: 21.08.1990 DE 4026414
(43) Veröffentlichungstag der Anmeldung: 18.03.1992
(73) Patentinhaber: Linde Aktiengesellschaft, 65189 Wiesbaden (DE)
(72) Erfinder: Lissack, Wilfried, Dipl.-Ing., W-8023 Höllriegelskreuth (DE); Stutzenberger, Werner, Dr. Dipl.-Ing., W-8000 München 70 (DE)

(56) Entgegenhaltungen:
- EP-A- 0 070 819
- DE-U- 8 912 136
- GB-A- 1 370 071
- US-A- 4 016 003
- Stahl u. Eisen 80(1960), Nv.7, 31. März, Seiten 441-444 "Das Frischen mit Sauerstoff in Siemens-Martin-Stahlwerken"

## Beschreibung

Die Erfindung betrifft ein Verfahren zur Verringerung von schädlichen Verbindungen in den Abgasen eines brennerbefeuerten Schmelzofens, bei dem Schmelzgut in den Ofen eingebracht und dort mit einem Feuerungsbrenner mit Wärme beaufschlagt wird, wobei die Verbrennungsgase, die mit schädlichen Verbindungen aus dem Schmelzgut angereichert werden, im wesentlichen vom Feuerungsbrenner zur Abzugsöffnung im Ofen strömen.

In Metallschmelzöfen, insbesondere in Öfen, in denen NE-Recycling-Metall eingeschmolzen wird, z.B. Aluminium oder Blei, entstehen häufig Schwelgase und letztlich Abgase mit hohen Konzentrationen an unerwünschten Kohlenstoffverbindungen, insbesondere Kohlenwasserstoffen und Kohlenmonoxid. Hinsichtlich dieser Gase ist derzeit ein Grenzwert von 50 mg organischem Kohlenstoff im Halbstundenmittel im Abgas zu berücksichtigen. Besagte Gase entstehen beim Schmelzprozeß des mit entsprechenden Verunreinigungen eingebrachten Materials, z.B. aus Lackierungen oder anderen Kunststoffbeschichtungen dieses Materials, wobei diese Materialien durch das Erhitzen verdampfen, sich mit den vom Feuerungsbrenner stammenden Verbrennungsgasen vermischen und schließlich in dieser Mischung die Anlage durch den Abgaskanal verlassen.

Vielfach wurde bislang die bei diesen Schmelzvorgängen auftretende Schadstofferzeugung einfach hingenommen, andererseits ist dies nach heutiger Sehweise und auch vor dem Hintergrund nicht überschreitbarer Schadstoff-Obergrenzen nicht mehr vertretbar oder zulässig. Zur Verminderung der Schadstoffe wurden daher auch schon Einrichtungen vorgeschlagen, die im wesentlichen für eine Nachverbrennung der schädlichen Verbindungen im Abgasteil einer solchen Schmelzanlage sorgen. Dafür sind eigens dafür zu installierende Nachbrenner bekannt, die auf das im Abgaskanal fließende Gas einwirken. Diese Maßnahmen bedeuten jedoch einen nicht unerheblichen Energie- und Sachaufwand und eine zusätzliche thermische Belastung der Abgasseite einer Schmelzanlage.

Zum Frischen, d.h. Oxidieren von Kohlenstoff und unerwünschten Elementen in der Schlacke, ist es bei Siemens-Martin-Öfen bekannt, Sauerstoff über wassergekühlte Lanzen, die senkrecht von oben in den Ofen geführt werden, knapp oberhalb des Bades auf die Schlacke zu blasen (''Stahl u. Eisen'' 80, Nr.7, 31. März 1960, S. 441-444). Durch dieses Verfahren wird die chemische Zusammensetzung der Schmelze verändert, um Roheisen in Stahl umzuwandeln, eine Schadstoffreduktion in den Abgasen des Schmelzofens ist nicht beabsichtigt.

Die Aufgabenstellung der vorliegenden Erfindung besteht daher darin, eine Verbesserung der geschilderten Umstände zu schaffen, also eine Verringerung der erzeugten, schädlichen Verbindungen in den Abgasen bei den angesprochenen Schmelzprozessen auf möglichst günstige und effiziente Weise zu erreichen.

Besagte Umstände werden erfindungsgemäß dadurch verbessert, daß dem im Ofen strömenden Gasgemisch aus Verbrennungs- und Schwelgasen sauerstoffreiches Gas zugeführt wird, wobei die Einspeisung des sauerstoffreichen Gases in der Umgebung der Abzugsöffnung des Schmelzofens oder aus der Abzugsöffnung selbst vorgenommen wird und dabei eine Einspeisungsrichtung eingehalten wird, die entgegen der sich ohne Sauerstoffeintrag ergebenden Hauptströmung im Schmelzraum gerichtet ist.

Die Zuspeisung von sauerstoffreichem Gas entgegen das im Raum über der Schmelze strömende Ofengas bewirkt, daß die dort sich sammelnden Verbrennungs- und Schwelgase, also Wasser, CO₂, CO und Kohlenwasserstoffe, sofern sie nicht schon in der höchsten Oxidationsendstufe vorliegen, bereits im Ofen weiter oxidiert, also nachverbrannt werden. Dadurch werden insbesondere die schädlichen Verbindungen, wie Kohlenmonoxid oder Kohlenwasserstoffe weiterreagiert, wodurch auch deren Anteile im Abgas wie gewünscht vermindert werden. Die gegensinnige Orientierung der Zugabe des sauerstoffreichen Gases bezüglich des Zuflusses der Verbrennungsgase vom Feuerungsbrenner bewirkt dabei, daß in den Schmelzofeninnenraum sich gegenseitig verwirbelnde Strömungen eingebracht werden und so diese strömenden Gase nur zu einem geringen Teil schon nach kurzer Zeit wieder aus dem Ofen austreten. Dabei entstehen nämlich Rezirkulations- und Wirbelströmungen im Ofeninnenraum, die die Aufenthaltszeit der schädlichen Verbindungen im Ofen bei hohen Temperaturen verlängern und so die besagte Oxidation stark begünstigen.

Durch Zugabe des sauerstoffreichen Gases in der Umgebung der Abzugsöffnung für die Ofengase oder aus der Abzugsöffnung selbst wird erreicht, daß der eingespeiste O₂-Volumenstrom nicht die Hauptströmungsrichtung unterstützt und damit hilft, Schadstoffe unverbrannt in das Abgassystem zu treiben, sondern daß nahezu alle Gase vor dem Verlassen des Schmelzofens mit dem sauerstoffreichen Gasstrom in Berührung kommen, wobei gleichzeitig eine sehr effziente Rezirkulation der Ofengase bewirkt wird. Mit dieser Ausführung wird eine besonders wirkungsvolle Abgasreduzierung festgestellt, die wohl darauf beruht, daß der aus dem Abgaskanal oder seiner Umgebung kommende Sauerstoffstrom quasi eine Kohlenwasserstoff- und Kohlenmonoxidsperre für die abziehenden Gase darstellt. Es wird also bewirkt, daß die Schwelgase bereits im Ofen verbrennen, wodurch die entstehende Wärme dem Schmelzprozeß zu gute kommt und nicht das Abgassystem belastet. Wertvolle Primärenergie kann so eingespart werden.

Ein grundsätzlicher Vorteil des erfindungsgemäßen Verfahrens besteht darüber hinaus darin, daß über die zusätzliche Sauerstoffzuführung in den Ofen eine vom Feuerungsbrenner unabhängige Sauerstoffzufuhrmöglichkeit zum Ofen besteht. So kann jetzt auch bei ruhendem Brennerbetrieb, verminderter Brennerleistung oder während der Zufuhr einer Altmetall-Charge Sauerstoff zugeführt und auch in diesen Phasen die notwendige Sauerstoffmenge bereitgestellt werden.

Die Sauerstoffzufuhr kann dabei mit einer Sauerstofflanze, die gegebenenfalls gekühlt ausgebildet sein kann, ausgeführt werden. Vorzugsweise wird jedoch als Sauerstoffinjektor ein Sauerstoffbrenner in stark überstöchiometrischer Betriebsweise angewendet, wodurch sich eine weitere Förderung der erwünschten Oxidation bzw. Verbrennung besagter Schadstoffe auch und gerade in temperaturmäßig kritischen Phasen des Schmelzprozesses - Aufheizphase nach dem Chargieren - ergibt.

Als besonders vorteilhaft hat sich die Anwendung des erfindungsgemäßen Verfahrens beim Schmelzen von Metallen in Drehtrommelöfen z.B. für Aluminium erwiesen. Bei diesen Öfen sind der Feuerungsbrenner und der Abgaskanal genau einander gegenüberliegend an den jeweiligen Stirnseiten der Schmelztrommel angeordnet, wodurch sich in diesen Öfen aufgrund deren Geometrie besonders günstige Strömungsverhältnisse ergeben und eine weitgehende Reduktion der betreffenenden Schadstoffe erreicht wird.

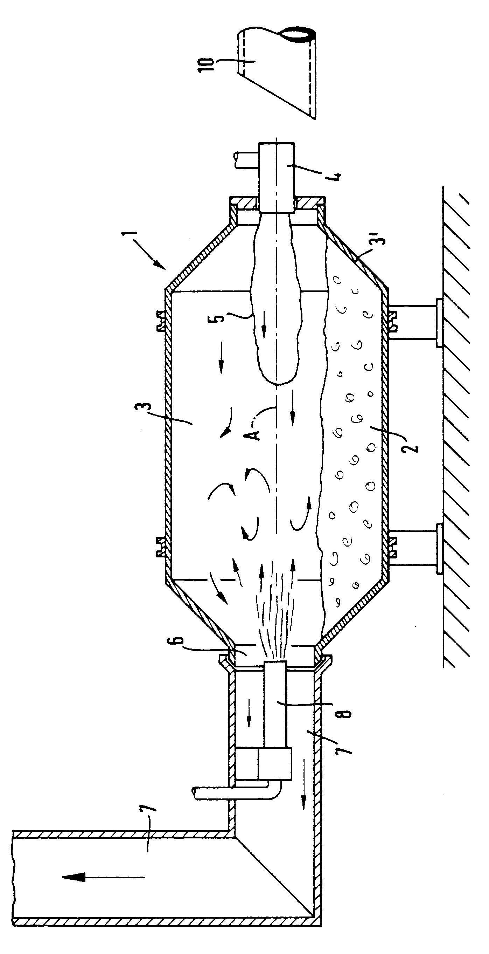

Anhand der Figur soll im folgenden die erfindungsgemäße Verfahrensweise mit einer zugehörigen Schmelzanlage beispielhaft näher beschrieben werden.

Die Figur zeigt einen Drehtrommelofen 1 für das Schmelzen von Aluminiumschrott 2. Eine Drehtrommel 3', die einen Schmelzraum 3 umschließt, wird einseitig mit einem auf der Trommelachse A angeordneten Feuerungsbrenner 4 beheizt, wobei die erzeugte Brennerflamme durch eine Linie 5 angedeutet ist. Hinter dem Feuerungsbrenner 4, der ein Erdgas-Luftbrenner ist, ist eine Zugabevorrichtung 10 angedeutet, mit der dem Drehtrommelofen bei zurückgeklapptem Brenner 4 Schmelzgut zugeführt werden kann. Auf der der Brennerseite gegenüberliegenden Stirnseite der Drehtrommel 3' befindet sich eine Abzugsöffnung 6, durch die Abgase, die aus Verbrennungsgasen des Feuerungsbrenners 4 sowie Schwelgasen aus dem Einsatzgut 2 bestehen, die Drehtrommel des Schmelzofens 1 verlassen. An die Abzugsöffnung 6 für die Abgase schließt sich ein Abgaskanal 7 an, wobei axial in diesem Kanal und in Richtung Schmelzraum gerichtet ein Sauerstoff-Erdgas-Brenner 8 angeordnet ist, wobei dessen Austrittsdüse sich etwa in der Ebene der Abzugsöffnung 6 des Schmelzraums 3 befindet. Die Anordnung dieses Sauerstoff-Injektionsbrenners 8 kann variieren, wobei dieser Brenner fast um seine Eigenlänge in den Schmelzraum hineinreichend oder in den Abgaskanal zurückgezogen angeordnet sein kann. In jedem Fall ist der Sauerstoffbrenner 8 dem Feuerungsbrenner 4 entgegengerichtet, und bringt somit einen Gasimpuls ein, der dem Bewegungsimpuls der vom Brenner 4 stammenden Verbrennungsgase genau entgegenwirkt und somit Gasverwirbelungen bis hin zu Gasrezirkulationen erzeugt, wie sie mit den Pfeilen in der Figur angedeutet sind.

Dieser Sauerstoffbrenner 8 ist beim üblichen Ofenbetrieb nicht vorhanden. Bisher war der Schmelibetrieb in einem solchen Ofen derart, daß, nach dem eine Schrottcharge in die Drehtrommel des Ofens eingebracht war, diese mit dem Feuerungsbrenner beaufschlagt wurde, wobei die Verbrennungsgase und die bei der Erhitzung aus den Verunreinigungen des Einsatzgutes entstehenden Schwelgase gemäß dem sich durch den Feuerungsbrenner ergebenden Gasimpuls im Ofen weitertransportiert wurden. Die Ofengasströmung wird im weiteren in der vorbekannten Betriebsweise durch die Lage der Abzugsöffnung 6 beeinflußt und es ergibt sich in der Regel im Ofen eine Hauptströmung vom Feuerungsbrenner 4 weg hin zur Abzugsöffnung 6. Auf diese Weise geraten auch die erfindungsgemäß angesprochenen schädlichen Verbindungen, die sich in den Schwelgasen aus dem Schmelzgut befinden und im wesentlichen aus Kohlenwasserstoffen und Kohlenmonoxid bestehen, vergleichsweise schnell aus den heißen und sauerstoffarmen Zonen des Schmelzofens und in den Abgaskanal 7, aus dem sie dann letztlich unverändert an die Umgebung abgegeben werden.

Gegen diese Schadgasemissionen wurde, wie eingangs erwähnt, eine Nachverbrennung im oder am Abgaskanal mittels eigens dafür anzubringenden Brennkammern oder Brennern vorgeschlagen. Diese Möglichkeiten sind einerseits aufgrund des nicht unbeträchtlichen Aufwandes und andererseits aufgrund von entstehenden Schäden im Abgaskanal mit erheblichen Nachteilen behaftete Möglichkeiten. Andererseits führte auch der Gedanke, das Sauerstoffangebot im Ofen durch feuerungsseitig zugeführten Sauerstoff zu erhöhen und somit zu einer höheren Verbrennungsquote der schädlichen Verbindungen im Ofen zu gelangen, zu keiner wesentlichen Verbesserung der beschriebenen Problematik.

Gemäß der Erfindung wird nun jedoch mit einem etwa in der Abzugsöffnung 6 angeordneten und gegen die Hauptströmung der Ofengase ausgerichteten Sauerstoff-Brennstoffbrenner gearbeitet. Dieser wird mit Sauerstoffüberschuß betrieben und zwar in der Weise, daß der größere Teil des dem Brenner zugeführten Sauerstoffs unverbraucht in den Schmelzraum gelangt. Durch den so erzeugten Sauerstoffstrom bzw. diese Sauerstoff-Flamme aus dem Abgaskanal 7 entsteht eine Gegenströmung zur sonst im Ofen vorhandenen Hauptströmung. Dadurch werden erhebliche Teile der Hauptstromgase im Ofen rezirkuliert, wobei diese Rezirkulationsströme mit Sauerstoff angereichert werden. Dieses Sauerstoffangebot in Verbindung mit der im Schmelzraum 3 herrschenden Hitze führt zu einer Verbrennung der besagten unreagierten Verbindungen, wie Kohlenmonoxid und sonstige Kohlenwasserstoffe, also zu einer Reduzierung dieser Verbindungen im Abgas. Selbst eine Ofentemperatur, die eine Verbrennung der schädlichen Verbindungen nicht mehr gewährleisten würde, schafft beim Sauerstoffeintrag mit einem Sauerstoffbrenner keine Nachteile, da die Verbrennung der Schadstoffe auch durch die Sauerstoff-Brennstoff-Flamme des Zusatzbrenners bewirkt wird. Dies spielt vor allem in der Aufheizphase einer neu eingebrachten Charge, in der zwar bereits die Schwelgase aus dem Einsatzgut entweichen, aber die Ofentemperatur noch auf vergleichweise niederem Niveau liegt, eine wesentliche Rolle. Während des Hauptteils des Schmelzvorgangs führt jedoch auch eine reine Sauerstoffzufuhr beispielsweise mit einer Sauerstofflanze zu dem gewünschten Ergebnis.

Besonders günstig ist eine verschiebbare Unterbringung des Sauerstoffbrenners 8 im Abgaskanal 7, wodurch eine hinsichtlich der Abgaswerte optimale Positionierung des Brenners im Abgaskanal bezüglich des Schmelzraums gefunden werden kann.

Die erfindungsgemäße Vorgehensweise stellt eine vergleichsweise einfach realisierbare und keine anderen Nachteile aufweisende Möglichkeit dar, mit der die Werte an schädlichen Verbindungen im Abgas bei besagten Schmelzprozessen erheblich gesenkt werden können. Vor allem wenn zur Feuerung bereits ein Sauerstoff-Brennstoff-Brenner verwendet wird, ist die Einrichtung des Verfahren leicht durchzuführen.

## Patentansprüche

1. Verfahren zur Verringerung von schädlichen Verbindungen in den Abgasen eines brennerbefeuerten Schmelzofens, bei dem Schmelzgut in den Ofen eingebracht und dort mit einem Feuerungsbrenner mit Wärme beaufschlagt wird, wobei die Verbrennungsgase, die mit schädlichen Verbindungen aus dem Schmelzgut angereichert werden, im wesentlichen vom Feuerungsbrenner zur Abzugsöffnung im Ofen strömen, **dadurch gekennzeichnet, daß** dem im Schmelzofen (1) strömenden Gasgemisch sauerstoffreiches Gas zugeführt wird, wobei die Einspeisung des sauerstoffreichen Gases in der Umgebung der Abzugsöffnung (6) des Schmelzofens (1) oder aus der Abzugsöffnung (6) selbst vorgenommen wird und dabei eine Einspeisungsrichtung eingehalten wird, die entgegen der sich ohne Sauerstoffeintrag ergebenden Hauptströmung im Schmelzraum (3) gerichtet ist.

2. Verfahren nach Anspruch 1, dadurch gekennzeichnet, daß das sauerstoffreiche Gas reiner Sauerstoff ist.

3. Verfahren nach einem der Ansprüche 1 oder 2, dadurch gekennzeichnet, daß die Sauerstoffzufuhr mit einem stark überstöchiometrisch betriebenen Sauerstoff-Brenner (8), d.h. mit einem mit Sauerstoffüberschuß betriebenen Brenner (8), ausgeführt wird.

4. Anwendung des Verfahrens nach einem der Ansprüche 1 bis 3 beim Schmelzen von Metallen in Drehtrommelschmelzöfen (1), bei denen der Feuerungsbrenner (4) und der Abgaskanal (7) genau einander gegenüberliegend an den jeweiligen Stirnseiten der Schmelztrommel (3') angeordnet sind.

## Claims

1. Method for reducing harmful compounds in the flue gases of a burner-fired melting furnace in which melting charge is fed into the furnace and there subjected to heat with a firing burner and the combustion gases enriched with harmful compounds from the melting charge essentially flow from the firing burner to the outlet opening in the furnace, characterised in that oxygen-rich gas is added to the gas mixture flowing in the melting furnace (1), the oxygen-rich gas is fed in near the outlet opening (6) of the melting furnace (1) or from the outlet opening (6) itself and a feeding direction is maintained which runs counter to the main flow in the melting chamber (3) arising without the introduction of oxygen.

2. Method according to claim 1, characterised in that the oxygen-rich gas is pure oxygen.

3. Method according to one of claims 1 or 2, characterised in that the oxygen is supplied with an oxygen burner (8) operated well above the stoichiometric level, i.e. with a burner (8) operated with surplus oxygen.

4. Use of the method according to one of claims 1 to 3 when melting metals in revolving-drum melting furnaces (1) in which the firing burner (4) and the flue (7) are arranged lying exactly opposite one another at the respective ends of the melting drum (3').

## Revendications

1. Procédé pour diminuer les composés nocifs dans les gaz d'échappement d'un four de fusion chauffé par brûleur, dans lequel des matières à fondre sont introduites dans le four et y sont soumises à la chaleur d'un brûleur de chauffage, les gaz de combustion qui sont chargés de composés nocifs en provenance des matières à fondre, s'écoulent dans le four sensiblement du brûleur de chauffage à l'ouverture de sortie, caractérisé en ce que l'on ajoute du gaz riche en oxygène au mélange gazeux s'écoulant dans le four de fusion (1), l'on réalise l'injection du gaz riche en oxygène à proximité de l'ouverture de sortie (6) du four de fusion (1) ou dans l'ouverture de sortie (6) elle-même et l'on maintient ainsi une direction d'injection qui est dirigée dans l'espace de fusion (3) à l'encontre de l'écoulement principal sans apport d'oxygène.

2. Procédé selon la revendication (1), caractérisé en ce que le gaz riche en oxygène est de l'oxygène pur.

3. Procédé selon l'une des revendications 1 ou 2, caractérisé en ce que l'injection d'oxygène est réalisée avec un brûleur à oxygène (8) réglé à des proportions situées fortement au delà de l'état stoechiométrique, c'est-à-dire avec un brûleur (8) fonctionnant avec un excès d'oxygène.

4. Application du procédé selon l'une des revendications 1 à 3 à la fusion des métaux dans des fours de fusion à tambour rotatif (1), dans lesquels le brûleur de chauffage (4) et le canal d'évacuation des gaz (7) sont situés exactement à l'opposé l'un de l'autre aux extrémités latérales correspondantes du tambour de fusion (3').
